Europäisches Patentamt

European Patent Office

Office européen des brevets

(19)

(11) EP 0 933 909 A1

(12) DEMANDE DE BREVET EUROPEEN

(43) Date de publication:
04.08.1999 Bulletin 1999/31

(51) Int Cl.$^6$: H04M 1/23

(21) Numéro de dépôt: 99200187.5

(22) Date de dépôt: 22.01.1999

(84) Etats contractants désignés:
AT BE CH CY DE DK ES FI FR GB GR IE IT LI LU
MC NL PT SE
Etats d'extension désignés:
AL LT LV MK RO SI

(30) Priorité: 30.01.1998 FR 9801078

(71) Demandeur: Koninklijke Philips Electronics N.V.
5621 BA Eindhoven (NL)

(72) Inventeur: Rapeli, Juha
75008 Paris (FR)

(74) Mandataire: Chaffraix, Jean
Société Civile S.P.I.D.
156, Boulevard Haussmann
75008 Paris (FR)

(54) Equipement téléphonique comportant un clavier à touches générateur de sons

(57) L'invention concerne un appareil téléphonique équipé d'un clavier à touches supprimant toute liaison électrique avec les circuits associés. Un dispositif (23) de génération de fréquences sources est prévu et comprend sous chaque touche un organe mécanique capable de vibrer à une fréquence spécifique. Un sous-ensemble (25) détecte ces fréquences et localise leurs sources et, après conversion en signaux électriques, assure le traitement des informations correspondant à ceux-ci et donc aux touches spécifiquement sollicitées. Application: radiotéléphones.

FIG.2

EP 0 933 909 A1

10a    10b    10c

a1    b1    b2    c2

c1

a2

61    62
63    64    25
65    66
CAN  67    68  CAN

RAM    ROM
69
DSP

# FIG.6

## Description

La présente invention concerne un dispositif électronique comprenant une pluralité de touches de commande et des moyens d'identification desdites touches.

Elle concerne également un procédé de détection d'appui touche pour identifier une touche appuyée parmi une pluralité.

Cette invention est utilisable dans tout appareil électronique nécessitant une interface d'entrée de type clavier à touches et en particulier dans un équipement téléphonique portable.

L'abrégé N° 63-233647(A) de la demande de brevet japonais N° 62-65750 déposée le 23 mars 1987 décrit un clavier à touches auquel est associé un générateur de sons. Les sons émis par action sur une des touches sont transmis à des circuits appropriés d'un récepteur téléphonique à l'aide d'un haut-parleur, pour être acheminés par le canal téléphonique classique jusqu'à un ordinateur qui effectuera la détection du clavier.

Un objet de l'invention est de proposer un clavier à touches équipé d'un générateur de sons et d'un dispositif de détection de l'activation d'une touche d'un tout autre type. En particulier la détection du clavier se fait par localisation d'une source sonore activée localement par l'appui d'une touche.

Pour cela, un dispositif tel que défini dans le préambule est remarquable en ce que lesdits moyens d'identification comprennent :

- une pluralité de sources sonores locales commandées par lesdites touches pour générer des signaux acoustiques et
- un sous-ensemble de localisation desdites sources recevant en entrée lesdits signaux acoustiques.

Cette structure, qui constitue un dispositif mécaniquement très simple peut être avantageusement intégrée dans un appareil de communication d'informations fonctionnant avec une carte de circuit imprimé. en effet, la position du clavier par rapport à la carte set rendue indifférente puisqu'il n'y a pas de liaison autre que acoustique entre les deux. Le clavier peut même avoir une forme originale et être par exemple incurvé.

Par ailleurs l'absence de liaison électrique entre l'arrière du clavier et la carte facilite la réalisation d'un dispositif étanche. Enfin, on notera que les fréquences acoustiques peuvent être choisies en dehors de la gamme des fréquences audibles.

Selon une caractéristique importante de l'invention, le sous-ensemble de localisation comprend :

- des moyens de détection desdits signaux acoustiques,
- des moyens de stockage pour mémoriser lesdits signaux détectés,
- des moyens de calcul pour mesurer un taux de corrélation entre lesdits signaux mémorisés en vue de déterminer un retard de détection,
- des moyens de comparaison dudit retard de détection à des retards de consigne correspondant à chaque source, pour localiser lesdites sources en fonction du résultat de la comparaison.

Les moyens de détection comportent un ou plusieurs capteurs acoustiques. L'identification de la touche actionnée se fait par détermination de la position de la source du son par rapport à la position des capteurs. Le calcul du taux de corrélation entre les différents signaux acoustiques captés permet de déterminer le retard relatif de détection entre les sons émis par une même source pour identifier la position de cette source par rapport aux capteurs.

Un autre objet de l'invention est de fournir un procédé de détection d'appui touche remarquable en ce que chaque touche est associée à une source sonore locale pour générer des signaux acoustiques en direction d'au moins un capteur, le procédé comportant les étapes suivantes :

- à partir d'une source locale, propagation d'un premier signal acoustique en direction d'un premier capteur et d'un deuxième signal acoustique en direction d'un deuxième capteur,
- détection et numérisation des premier et deuxième signaux,
- mise en mémoire desdits signaux numérisés,
- calcul d'un produit de corrélation entre lesdits premier et deuxième signaux mémorisés pour déterminer un retard de détection entre lesdits signaux et en déduire la localisation de ladite source.

L'invention sera mieux comprise à l'aide de la description suivante et des dessins annexés, donnés à titre d'exemples non limitatifs et dans lesquels :

- la figure 1 montre un exemple de dispositif (ici un appareil téléphonique portable) selon l'invention ;
- la figure 2 illustre une vue de profil de l'appareil téléphonique représenté à la figure 1;

- la figure 3 montre un exemple de réalisation des touches du clavier ;
- les figures 4 et 5 montrent un autre exemple de réalisation de chaque touche, respectivement au repos et en position opposée, en mouvement vibratoire de retour au repos ;
- la figure 6 représente un dispositif de localisation selon un mode de réalisation de l'invention ;
- la figure 7 représente une variante de réalisation du dispositif de localisation de la figure 6 ;
- la figure 8 représente un procédé de détection d'appui touche selon l'invention.

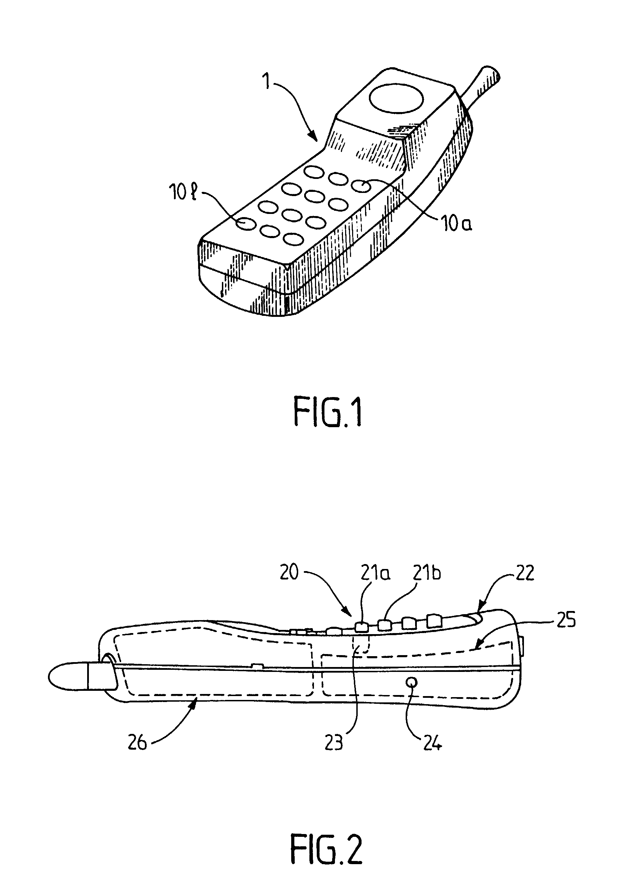

Dans l'exemple de réalisation représenté sur la figure 1, le clavier d'un appareil téléphonique portable 1 comprend des touches, ici douze (10a à 10l), correspondant aux nombres 0 à 9 et aux fonctions * et #, et destinées à être sollicitées mécaniquement par l'utilisateur. Au verso de chaque touche se trouve d'ordinaire un contact qui, sous l'effet de l'action exercée sur la touche sollicitée, ferme un circuit électronique de traitement de signal, en général en vue de la transmission de l'information correspondant à la touche, ou en vue de tout autre traitement non directement concerné par l'invention.

Dans une réalisation conforme à l'invention, représentée sur la figure 2 qui montre un appareil téléphonique en vue de profil, l'appareil comprend un clavier 20 dont les touches 21a, 21b, etc... (en vue de profil, toutes ne sont pas visibles) sont placées comme précédemment à la surface du boîtier 22, mais ne comportent aucune connexion électrique sur leur face arrière située dans l'appareil.

Chacune de ces touches, 21a par exemple, est simplement associée à un dispositif 23 purement mécanique, destiné à produire un son ou une onde acoustique (ce dispositif 23, schématiquement référencé sur la figure 2, va être détaillé plus loin).

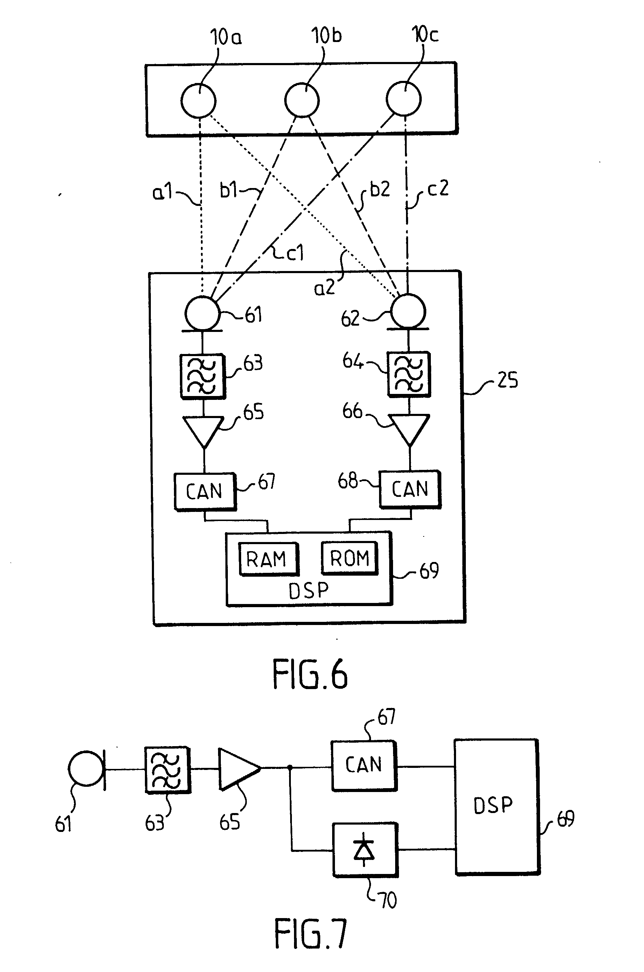

L'onde acoustique produite par action sur la touche 21a se propage et est reçu par un microphone 24. Ce microphone, situé plus loin dans le boîtier, est associé à des moyens électroniques de localisation de source sonore. Ces moyens seront détaillés plus loin à la figure 6, ils comprennent par exemple un circuit de traitement pouvant mémoriser les ondes incidentes, mesurer leur taux de corrélation pour en déduire leur retard relatif et comparer ce retard à des valeurs de consigne pour ainsi reconnaître la touche sollicitée.

Le microphone 24 et les moyens électroniques associés sont logés dans un sous-ensemble 25 constituant un module électronique de traitement du signal. Un module 26, non détaillé, regroupe les moyens d'alimentation équipant l'appareil téléphonique.

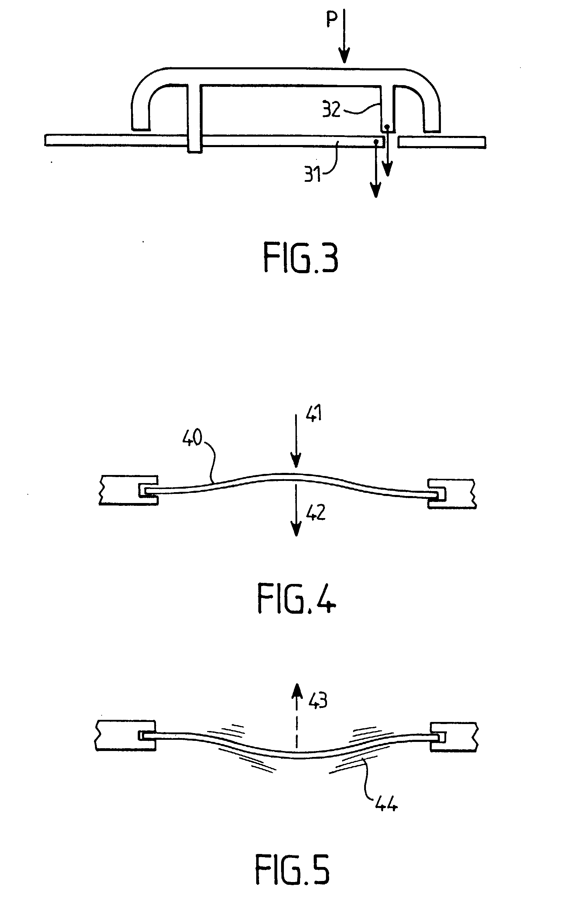

La constitution du dispositif 23 de génération de signaux acoustiques est par exemple celle de la figure 3. Sous chaque touche, une tige de poussée 32 est en appui contre une pièce déformable 31 capable de vibrer à une fréquence déterminée, autour d'une position de repos, sous l'action d'une poussée P exercée sur la tige par l'intermédiaire de la touche.

Selon un autre mode de réalisation du dispositif 23 (figure 4, position de repos), celui-ci peut consister en une membrane ou diaphragme convexe, par exemple métallique. Lorsqu'une poussée (figure 4, flèche 41) est exercée sur ce diaphragme en position de repos, il se déforme et vient occuper (flèche 42) une position opposée où il est au contraire de forme concave. Ce changement d'état est réversible : dès que la poussée disparaît, le diaphragme (figure 5, flèche 43) revient à sa position convexe initiale. Ce double mouvement rapide déclenche une brève vibration (référencée 44 sur la figure 5) du diaphragme, ou d'une partie de ce diaphragme, et produit un son ou une onde acoustique.

Bien entendu, quel que soit l'exemple de réalisation considéré, la fréquence de l'onde peut être choisies dans la gamme des fréquences audibles, ou au contraire en dehors de celle-ci.

Un dispositif de localisation conforme à l'invention est illustré aux figures 6 et 7 où les éléments constitutifs du sous-ensemble 25 sont détaillés.

Dans l'un ou l'autre des exemples de réalisation du dispositif de génération d'onde acoustique décrits ci-dessus en référence aux figures 3, 4 et 5, le sous-ensemble 25 localise la source du son par l'intermédiaire des microphones 61 et 62. Il transmet ensuite un signal électrique à traiter correspondant à l'information associée à la touche sollicitée.

Dans la suite de la description on considère que chaque touche est associée à une source sonore locale pour générer des signaux acoustiques (ou ondes incidentes) en direction de deux capteurs. Un seul capteur peut être suffisant à condition que les ondes incidentes qui lui arrivent en provenance d'une même source aient pu parcourir des chemins de propagation différents (notamment par réflexion contre des parois) et soient identifiables au niveau de la détection.

Dans les modes de réalisation illustrés aux figures 6 et 7, trois touches 10a, 10b et 10c peuvent actionner trois sources sonores (non représentées) et produire des ondes acoustiques numérotées a1, a2, b1, b2, c1 et c2. Deux microphones 61 et 62 sont disposés dans le boîtier de façon à pouvoir recevoir chacun une onde incidente provenant de chaque source (les parois internes du boîtier n'étant pas réfléchissantes). Chaque microphone 61, 62 est un capteur sonore qui détecte le signal analogique correspondant à chaque onde incidente. Ce signal est ensuite filtré par un filtre passe bande 63, 64 et amplifié par un amplificateur 65, 66 avant d'être numérisé et traité par un organe de calcul.

Le fonctionnement du dispositif de localisation 25 va être maintenant décrit en regard de la figure 6. Le signal analogique filtré et amplifié est échantillonné et numérisé par un convertisseur analogique/numérique CAN 67, 68 puis stocké dans une mémoire de type RAM (de l'anglais Random Access Memory) pour être ensuite traité par un organe 69. Cet organe, par exemple un processeur de traitement numérique du signal DSP comporte également une mémoire morte ROM où sont stockées des valeurs de consigne. Deux ondes acoustiques a1 et a2 générées par appui sur la touche 1 Oa sont ainsi captées par les deux microphones 61 et 62 avant d'être numérisées puis stockées en mémoire RAM du DSP.

On vérifie ensuite que les sons captés sont susceptibles de provenir d'une impulsion générée par le dispositif de génération sonore prévu sous chaque touche. Pour cela, le DSP calcule l'énergie de chaque onde incidente a1 et a2 et la compare à une valeur de seuil d'énergie consignée dans la mémoire ROM. Si l'énergie calculée est supérieure au seuil de consigne, le DSP procède à l'étape suivante.

Sinon, une erreur de détection est signalée et aucune touche n'est reconnue.

Pour augmenter la fiabilité de la détection, on effectue un calcul supplémentaire facultatif consistant à vérifier que la forme du son reçu ressemble à celle du son attendu. Pour cela, un modèle du signal émis par le générateur de sons est également stocké en ROM pour être comparé à la forme du signal transmis au DSP par les convertisseurs CAN. Le modèle de référence est constitué de L échantillons notés Xref(n) où n est un indice de numérotation allant de 0 à L-1. Le signal reçu du microphone 61 par le DSP est constitué des échantillons X1(0) à X1(L-1). Pour déterminer la ressemblance entre les échantillons reçus et les échantillons de référence, le DSP va calculer leur taux de corrélation :

$$\frac{\left[\displaystyle\sum_{n=0}^{L-1} X\,ref(n)\,X1(n)\right]^2}{\displaystyle\sum_{n=0}^{L-1}\left[X\,ref(n)\right]^2 . \displaystyle\sum_{n=0}^{L-1}\left[X1(n)\right]^2}$$

Le résultat est ensuite comparé à une valeur de seuil comprise entre 0.5 et 1. Typiquement, cette valeur est prise égale à 0.9. Si le résultat est supérieur à cette valeur de seuil, on considère que le bon signal a été détecté et le traitement continue. Sinon, on détecte une erreur.

Cette étape facultative apporte encore plus de sûreté à la méthode employée pour reconnaître l'origine spatiale du son reçu par les capteurs.

Si la forme de chaque signal reçu est suffisamment proche du modèle de référence, on détermine le retard relatif entre les deux signaux reçus au niveau des capteurs en calculant le taux de corrélation entre les échantillons reçus. Le calcul du retard est effectué par le DSP à partir des L échantillons reçus des convertisseurs 67 et 68 à la période d'échantillonnage Te.

Soient X1, le signal capté par le microphone 61 et X2 le signal capté par le microphone 62. On définit Rmin et Rmax tels que Rmin.Te soit égal au décalage minimal de détection entre les deux microphones, et tel que Rmax. Te soit égal au décalage maximal de détection entre les deux microphones. On calcule alors :

$$R = \max\left(\sum_{n=0}^{L-1} X1(n)\,X2(n+r)\right)$$
$$r\varepsilon\left[Rmin, Rmax\right]$$

où R représente le décalage temporel entre les détections et où *r* est un entier compris entre Rmin et Rmax. Si R est positif, 61 est en avance sur 62. Dans le cas contraire, c'est 62 qui est en avance sur 61. Si R est presque nul, les deux signaux ont été détectés à peu près en même temps. On vérifie ensuite dans une table de correspondance stockée en ROM, à quelle touche correspondent ces résultats.

En effet, à l'appui d'une touche du clavier correspond un retard de détection entre les deux capteurs. Les retards correspondant à chaque touche sont donc référencés en ROM pour permettre au DSP de reconnaître quelle touche a été appuyée. Dans l'exemple ci-dessus, une avance de 61 sur 62 correspond à la détection de la touche 10a, une avance de 62 sur 61 correspond à la détection de la touche 10c et la détection simultanée de 61 et 62 correspond à la détection de la touche 10b.

La figure 7 illustre une variante de réalisation de l'invention. Une partie seulement de la branche située à droite sur la figure 6 du dispositif 25 est représentée. Il va de soi que la même modification doit être apportée à la branche de gauche pour que le dispositif fonctionne. Cette variante consiste à ajouter un dispositif de détection de seuil 70 pour supprimer l'étape de calcul de l'énergie de l'onde incidente. Ce dispositif connu en soi peut être par exemple un détecteur à diode dont une entrée est reliée à la sortie de l'amplificateur 65 ou 66 et dont la sortie est connectée à un port d'activation du DSP 69. Cette mesure vise à minimiser la consommation d'énergie du DSP en ne l'activant que pour traiter des signaux déjà sélectionnés.

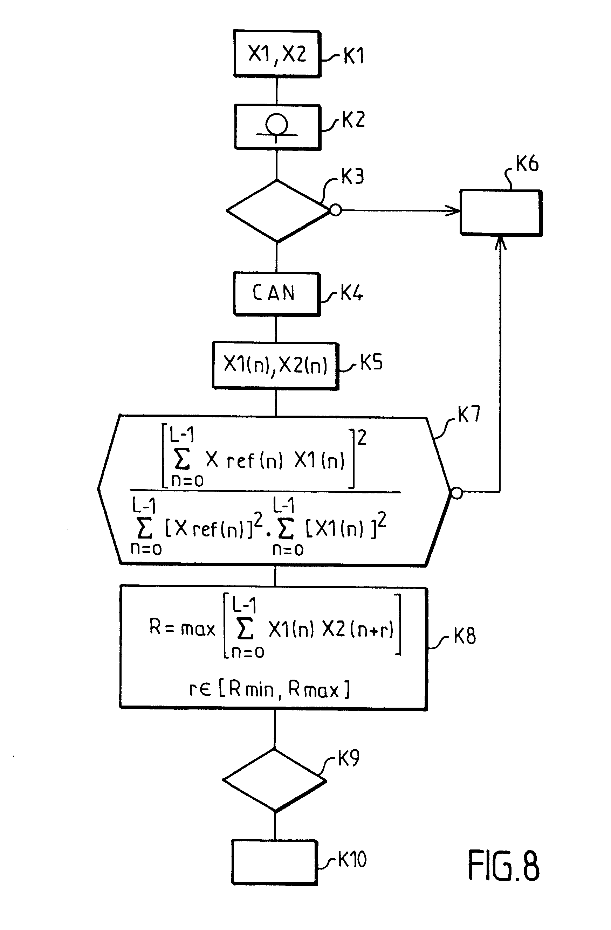

Un procédé de détection d'appui touche conforme à l'invention représentée à la figure 7 est schématisé à la figure 8. Le procédé comporte les étapes suivantes K1 à K.

- K1 : une source locale est actionnée par appui sur une touche, un premier signal acoustique X1 se propage en direction d'un premier capteur et un deuxième signal acoustique X2 se propage en direction d'un deuxième capteur ;
- K2 : détection de chaque signal par l'un des capteurs ;
- K3 : contrôle du niveau de chaque signal et comparaison à une valeur de seuil ;
- K4 : numérisation de chaque signal par un convertisseur analogique numérique CAN, les étapes K3 et K4 peuvent être effectuées en parallèle ;
- K5 : si les niveaux des deux signaux sont supérieurs à la valeur de seuil selon K3, chaque signal numérisé X1(n) et X2(n) est mis en mémoire, sinon le procédé signale une erreur de détection (K6);
- K7 : pour chaque signal, on calcule son taux de corrélation avec un modèle de référence. Si la forme des deux signaux est suffisamment proche du modèle de référence, on passe à l'étape K8, sinon on signale une erreur de détection (K6) ;
- K8 : on calcule le produit de corrélation entre les signaux X1(n) et X2(n) pour déterminer le retard de détection R entre ces deux signaux ;
- K9 : on compare ce retard à des valeurs de consigne correspondant à chaque source pour déterminer la source actionnée ;
- K10 : reconnaissance de la touche appuyée et fin du procédé.

Un dispositif et un procédé de détection d'appui touche selon l'invention ont ainsi été décrits et représentés appliqués à un équipement téléphonique. Il va de soi que l'invention peut aisément être incorporée dans d'autres appareils électroniques comportant des touches de commande et en particulier dans tout appareil de télécommunications.

## Revendications

1. Dispositif électronique comprenant une pluralité de touches de commande et des moyens d'identification desdites touches, caractérisé en ce que lesdits moyens d'identification comprennent :

   - une pluralité de sources sonores locales commandées par lesdites touches pour générer des signaux acoustiques et
   - un sous-ensemble de localisation desdites sources recevant en entrée lesdits signaux acoustiques.

2. Dispositif selon la revendication 1, caractérisé en ce que ledit sous-ensemble de localisation comprend :

   - des moyens de détection desdits signaux acoustiques,
   - des moyens de stockage pour mémoriser lesdits signaux détectés,
   - des moyens de calcul pour mesurer un taux de corrélation entre lesdits signaux mémorisés en vue de déterminer un retard de détection,
   - des moyens de comparaison dudit retard de détection à des retards de consigne correspondant à chaque source, pour localiser lesdites sources en fonction du résultat de la comparaison.

3. Dispositif selon la revendication 1, caractérisé en ce que lesdites sources sonores comprennent, sous chaque touche, un organe mécanique de génération de fréquence qui comporte une pièce déformable capable, sous l'action d'une tige de poussée située sous la touche, de vibrer autour d'une position de repos, à une fréquence spécifique.

4. Dispositif selon la revendication 3, caractérisé en ce que l'organe mécanique associé à chaque touche est un diaphragme convexe capable, sous l'action d'une déformation l'amenant en position concave, de retourner à sa position convexe d'origine en vibrant à une fréquence spécifique.

**5.** Dispositif selon l'une des revendications 1 à 4, caractérisé en ce qu'il fournit des commandes d'entrée à un appareil de communication d'informations comportant un étage de traitement de signaux pour convertir lesdites commandes d'entrée en signaux électriques correspondant auxdites informations.

**6.** Dispositif selon la revendication 5, caractérisé en ce que ledit appareil de communication d'informations est intégré dans un équipement téléphonique.

**7.** Procédé de détection d'appui touche pour identifier une touche appuyée parmi une pluralité, caractérisé en ce que chaque touche est associée à une source sonore locale pour générer des signaux acoustiques en direction d'au moins un capteur, le procédé comportant les étapes suivantes :

- à partir d'une source locale, propagation d'un premier signal acoustique en direction d'un premier capteur et d'un deuxième signal acoustique en direction d'un deuxième capteur,
- détection et numérisation des premier et deuxième signaux,
- mise en mémoire desdits signaux numérisés,
- calcul d'un produit de corrélation entre lesdits premier et deuxième signaux mémorisés pour déterminer un retard de détection entre lesdits signaux et en déduire la localisation de ladite source.

**8.** Procédé selon la revendication 7, caractérisé en ce que l'étape de détection et de numérisation comporte une sous étape de contrôle qui consiste à sélectionner pour la suite du procédé les signaux ayant un niveau supérieur à une première valeur de seuil.

**9.** Procédé selon la revendication 7, caractérisé en ce que l'étape de calcul comporte une étape de sélection préalable consistant à mesurer un taux de corrélation entre chaque signal mémorisé et un modèle de référence stocké en mémoire pour ne conserver que les signaux dont ledit taux est supérieur à une deuxième valeur de consigne.

FIG.1

FIG.2

P

32

31

FIG.3

41

40

42

FIG.4

43

44

FIG.5

FIG.6

FIG.7

$$\boxed{X1, X2}\ -K1$$

$$\boxed{\ominus}\ -K2$$

K3 ⬦ ———○————→ $\boxed{\phantom{K6}}$ — K6

$$\boxed{CAN}\ -K4$$

$$\boxed{X1(n), X2(n)}\ -K5$$

K7

$$\frac{\left[\displaystyle\sum_{n=0}^{L-1} X\,ref(n)\ X1(n)\right]^{2}}{\displaystyle\sum_{n=0}^{L-1} [X\,ref(n)]^{2}\cdot\displaystyle\sum_{n=0}^{L-1} [X1(n)]^{2}}$$

$$R = \max\left[\sum_{n=0}^{L-1} X1(n)\ X2(n+r)\right]\ -K8$$

$$r \in [R\,min,\ R\,max]$$

K9 ⬦

$$\boxed{\phantom{K10}}\ -K10$$

FIG.8

11

Office européen
des brevets

**RAPPORT DE RECHERCHE EUROPEENNE**

Numéro de la demande

EP 99 20 0187

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 4 677 600 A (YOSHIDA MOTOHIKO) 30 juin 1987 <br> * abrégé * <br> * colonne 1, ligne 35 - ligne 60 * <br> * colonne 2, ligne 40 - colonne 4, ligne 9 * <br> * figures 1,4 * | 1-5,7,9 | H04M1/23 |
| X | US 4 378 552 A (JALBERT VINCENT P) 29 mars 1983 <br> * abrégé * <br> * colonne 2, ligne 35 - ligne 55 * <br> * colonne 4, ligne 2 - ligne 45 * <br> * colonne 10, ligne 6 - ligne 60 * <br> * colonne 11, ligne 1 - ligne 20 * <br> * colonne 14, ligne 43 - ligne 46 * <br> * figures 1,4 * | 1-3,5, 7-9 | |
| P,X | FR 2 761 221 A (PHILIPS ELECTRONICS NV) 25 septembre 1998 <br> * abrégé * <br> * page 2, ligne 12 - page 3, ligne 5 * <br> * figures 1-5 * | 1,3-6 | **DOMAINES TECHNIQUES RECHERCHES (Int.Cl.6)** <br> H04M <br> H03K <br> H01H |
| A | US 3 647 962 A (WHETSTONE ALBERT L) 7 mars 1972 <br> * abrégé * <br> * colonne 1, ligne 1 - ligne 45 * <br> * colonne 3, ligne 59 - ligne 68 * <br> * figures 1,2,4 * | 1,2,5, 7-9 | |
| A | GB 2 048 531 A (STANDARD TELEPHONES CABLES LTD) 10 décembre 1980 <br> * abrégé * <br> * page 1, ligne 17 - ligne 39 * <br> * figure 1 * | 1-3,5,6 | |

Le présent rapport a été établi pour toutes les revendications

| Lieu de la recherche | Date d'achèvement de la recherche | Examinateur |
|---|---|---|
| LA HAYE | 9 mars 1999 | Fragua, M |

CATEGORIE DES DOCUMENTS CITES

X : particulièrement pertinent à lui seul
Y : particulièrement pertinent en combinaison avec un autre document de la même catégorie
A : amère-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

# EP 0 933 909 A1

## ANNEXE AU RAPPORT DE RECHERCHE EUROPEENNE
## RELATIF A LA DEMANDE DE BREVET EUROPEEN NO.

EP 99 20 0187

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-03-1999

| Document brevet cité au rapport de recherche | | Date de publication | Membre(s) de la famille de brevet(s) | | Date de publication |
|---|---|---|---|---|---|
| US 4677600 | A | 30-06-1987 | JP | 61138420 A | 25-06-1986 |
| | | | DE | 3543605 A | 19-06-1986 |
| | | | GB | 2168004 A,B | 11-06-1986 |
| US 4378552 | A | 29-03-1983 | BR | 7807603 A | 26-06-1979 |
| | | | CA | 1109137 A | 15-09-1981 |
| | | | CH | 633898 A | 31-12-1982 |
| | | | DE | 2850191 A | 23-05-1979 |
| | | | FR | 2409488 A | 15-06-1979 |
| | | | GB | 2008829 A,B | 06-06-1979 |
| | | | JP | 1162623 C | 10-08-1983 |
| | | | JP | 54081728 A | 29-06-1979 |
| | | | JP | 57056738 B | 01-12-1982 |
| | | | NL | 7811476 A | 23-05-1979 |
| | | | SE | 7811944 A | 22-05-1979 |
| FR 2761221 | A | 25-09-1998 | CN | 1202777 A | 23-12-1998 |
| | | | EP | 0871186 A | 14-10-1998 |
| | | | JP | 10340147 A | 22-12-1998 |
| US 3647962 | A | 07-03-1972 | FR | 2099394 A | 10-03-1972 |
| | | | GB | 1348007 A | 13-03-1974 |
| GB 2048531 | A | 10-12-1980 | AUCUN | | |

EPO FORM P0460

Pour tout renseignement concernant cette annexe : voir Journal Officiel de l'Office européen des brevets, No.12/82

13